(19) 

**Europäisches Patentamt**
**European Patent Office**
**Office européen des brevets**

(11) **EP 2 426 766 B1**

(12) **EUROPÄISCHE PATENTSCHRIFT**

(45) Veröffentlichungstag und Bekanntmachung des Hinweises auf die Patenterteilung:
**22.05.2013 Patentblatt 2013/21**

(21) Anmeldenummer: **11006485.4**

(22) Anmeldetag: **08.08.2011**

(51) Int Cl.:
*H01M 8/04* (2006.01)

(54) **Festoxid-Brennstoffzellen-System sowie Verfahren zum Betreiben eines solchen**

Solid oxide fuel cell system and method for operating the same

Système de pile à combustible à oxyde solide et procédé de fonctionnement de celui-ci

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.09.2010 DE 102010044408**

(43) Veröffentlichungstag der Anmeldung:
**07.03.2012 Patentblatt 2012/10**

(73) Patentinhaber: **Forschungszentrum Jülich Gmbh 52425 Jülich (DE)**

(72) Erfinder:
- **Peters, Roland**
 **52441 Linnich (DE)**
- **Deja, Robert**
 **52078 Aachen (DE)**
- **Blum, Ludger**
 **52428 Jülich (DE)**

(56) Entgegenhaltungen:
**DE-A1-102008 054 375     JP-A- 3 037 965
US-A1- 2009 280 373**

**Beschreibung**

Die Erfindung betriff ein System umfassend wenigstens eine Festoxid-Brennstoffzelle (Solid Oxide Fuel Cell, SOFC), sowie ein geeignetes Verfahren zum Betreiben derselben.

Stand der Technik

Festoxid-Brennstoffzellen (Solid Oxide Fuel Cells, SOFC) mit keramischen Zellen sind eine der Hochtemperatur-Varianten der Brennstoffzelle. Sie werden bei 600 bis 1000°C betrieben und liefern dabei höchste elektrische Wirkungsgrade von etwa 50 %. Sie sind einsetzbar in der Hausenergieversorgung, der industriellen Kraft-Wärme-Kopplung (BHKW), in Kraftwerken zur Stromerzeugung und selbst zur Stromerzeugung an Bord von Fahrzeugen. Die SOFC wird vorwiegend in zwei Hauptvarianten entwickelt: als Röhre und als flache Membran. Sie kann mit Wasserstoff, aber auch mit Methan oder Dieselreformat, bzw. auch mit Reformat von anderen Kohlenwasserstoffen betrieben werden. Der Elektrolyt dieses Zelltyps besteht aus einem festen keramischen Werkstoff (klassisch: yttriumdotiertes Zirkoniumdioxid, YSZ), der in der Lage ist, Sauerstoffionen zu leiten, für Elektronen jedoch isolierend wirkt. Die Kathode ist ebenfalls aus einem keramischen Werkstoff (strontiumdotiertes Lanthanmanganat) gefertigt, der für Ionen und für Elektronen leitfähig ist. Die Anode wird aus Nickel mit yttriumdotiertem Zirkonoxid (sogenanntes Cermet) gefertigt, der ebenfalls Ionen und Elektronen leitet.

Beim Betrieb von Hochtemperaturbrennstoffzellen tritt der Brennstoff, beispielsweise Erdgas, über ein Gebläse in den Vorreformer. Es ist vorteilhaft, eine Hochtemperatur-Brennstoffzelle (SOFC-Anlage) wasserautark auszuführen. Eine Methode, die Wasserautarkie zu gewährleisten, ist die teilweise Rückführung (Rezirkulation) des wasserdampfhaltigen Anodenabgases. Hierbei ist es nötig, je nach Anlagenlast eine bestimmte Rezirkulationsmenge oder ein bestimmtes Rezirkulationsverhältnis dem frischen Brenngas zuzumischen. Ist die Rezirkulationsmenge und damit auch die Dampfmenge zu gering, so kann es nachteilig zur Russbildung in den vom Brenngas durchströmten Komponenten kommen, wodurch die Anlage irreversibel beschädigt wird. Bei zu hoher Rezirkulationsmenge wird das Brenngas übermäßig verdünnt, wodurch der Wirkungsgrad der SOFC abgesenkt wird.

In der Regel werden daher mittels einer Strahlpumpe oder eines Gebläses ca. 60 % des Anodenabgases zurückgeführt und mit dem frisch zugeführten Brennstoff gemischt. Dies hat zwei Vorteile. Zum einen steigt die Brennstoffnutzung im System an, was den elektrischen Systemwirkungsgrad erhöht. Zum anderen wird Wasserdampf zurückgeführt, der für die Dampfreformierung von Erdgas benötigt wird und ansonsten zusätzlich erzeugt und dem System zugeführt werden müsste, was die Komplexität erhöht und den thermischen Systemwirkungsgrad verschlechtert. In einem vorgeschalteten Vorreformer werden beispielsweise ca. 10 bis 30 % des Erdgases sowie höhere Kohlenwasserstoffe reformiert, das restliche Methan wird im Brennstoffzellenstapel in Wasserstoff und Kohlenmonoxid umgewandelt, wodurch auf Grund dieses endothermen Prozesses zudem die zur Kühlung erforderliche Luftmenge deutlich reduziert wird.

Um einen sicheren und optimalen Betrieb des Brennstoffzellen-Systems zu gewährleisten, muss jeweils eine definierte Menge des Anodenabgases zurückgeführt werden. Die Menge an zurückgeführtem Anodenabgas ist dabei abhängig vom jeweiligen Lastpunkt der SOFC. Daher sollte ein geeignetes Verfahren zur Verfügung stehen, mit welchem der Anteil an zurückgeführtem Anodenabgas bestimmt werden kann.

Im Eintrittsstrom in den Reformer sollte ein bestimmter Wasserdampfeintrag, angegeben als S/C-Verhältnis, eingehalten werden. Das S/C-Verhältnis ist definiert als das molare Verhältnis von Wasser (Steam) zu Kohlenstoffatomen in den Kohlenwasserstoffen (Carbon) und je nach Definition auch in CO und $CO_2$. Über dieses Verhältnis wird die erforderliche Wassermenge bestimmt, um eine Russbildung sicher zu verhindern. Hierfür ist es erforderlich, die Zusammensetzung, die in der Regel bekannt ist, und den Massenstrom, der beispielsweise mit einem thermischen Durchflussmesser gemessen werden kann, des Frischgases sowie die Zusammensetzung bzw. den Feuchtegehalt und den Massenstrom des Rezyklats zu kennen.

Derzeit wird die absolute zurückgeführte Menge an Anodenabgas (Rezirkulatstrom) mit verschiedenen konventionellen Durchflussmessmethoden bestimmt, wobei zunächst die Geschwindigkeit und über den entsprechenden Leitungsquerschnitt der Volumenstrom des Abgases bestimmt wird. Bei Kenntnis der aktuellen Temperatur und der genauen Gaszusammensetzung des Anodenabgases kann damit über eine Kennlinie des verwendeten Messgerätes auf den absoluten Massenstrom geschlossen werden. Dieser kann dann im Anschluss mit dem des zugeführten frischen Brennstoffs verglichen oder über vorher bestimmte Kennlinien des Rezirkulationsgebläses oder der Strahlpumpe indirekt festgelegt werden.

Diese Verfahrensweise zeigt jedoch einige Nachteile. So kann das Anodenabgas im Betrieb schwankende Temperaturen zwischen 600 und über 900 °C aufweisen, während das der Anode zugeführte Gas in der Regel Temperaturen zwischen 400 und 800 °C aufweist. Zudem kann die Gaszusammensetzung des Anodenabgases je nach Rezirkulationsverhältnis und Lastpunkt der Brennstoffzelle stark schwanken. Diese Tatsachen erschweren die Umrechnung des ermittelten zurückgeführten Volumenstroms des Anodenabgases in einen Massenstrom, der bislang für den Abgleich mit dem zugeführten frischen Brennstoff benötigt wurde.

Die bisherige Unsicherheit in der Bestimmung des Massenstroms des zurückgeführten Anodenabgases kann aber den sicheren Betrieb der Anlage gefährden, da beispielsweise ein zu geringer Wassergehalt regelmäßig zu Russbildung führt, und ein zu hoher Wassergehalt im Anodenkreislauf die Leistung der Brennstoffzelle reduziert.

Aus JP 3 037965 A (ISHIKAWAJIMA HARIMA HEAVY IND) 19. Februar 1991 (1991-02-19), vgl. die Zusammenfassung und die Abbildung, ist bereits ein Brennstoffzellensystem mit einer Anodengasrückführung bekannt. Über eine Durchflussmessung am Anodenaustritt und eine die Gasmischung berücksichtigende Korrekturtabelle kann auf eine akkurate Durchflussmessung am Anodenaustritt geschlossen werden, die zur Anode zurückgeführt wird.

Aus DE 10 2008 054375 Ai (BOSCH GMBH ROBERT [OE]) 10. Juni 2010 (2010-06-10) ist ebenfalls eine Brennstoffzelle mit einer Anodengasrückführung bekannt. Über zwei Druckmessungen vor und hinter der Brennstoffzelle. Über zwei Druckmessungen an Stellen V1 und V2 vor und hinter der Brennstoffzelle wird auf komplexe Weise über das Aufstellen von Zustandsdiagrammen und die Schätzungen der Stoffmengen aus diesen Diagrammen anschließend zwei geschätzte Drücke für V1 und V2 berechnet, die dann mit den gemessenen verglichen werden. Ziel ist es, die Stoffmengen eines Reaktanden (Brennstoff) in dem ersten Volumen zu bestimmen, um daraus den Stoffmengenanteil bzw. Patialdruck in einem Anodengasstrom zu berechnen, um so anhand eines vorgegebenen Grenzwertes entscheiden zu können, wann ein Auslassventil kurzzeitig geöffnet werden soll, um so diskontinuierlich einen Stoffstrom (Anodenabgas) in die Umwelt entweichen zu lassen.

Aufgabe und Lösung

Die Aufgabe der Erfindung ist es, eine Betriebsführung für eine SOFC zur Verfügung zu stellen, die einerseits eine effektive Brennstoffnutzung im System und damit einen hohen elektrischen Wirkungsgrad garantiert, und anderseits ein optimiertes Wassermanagement auf der Anodenseite sicherstellt, welches insgesamt zu einem verbesserten Wirkungsgrad der gesamten SOFC führt.

Die Aufgabe der Erfindung wird gelöst durch ein Verfahren zum Betreiben einer Festoxid-Brennstoffzelle gemäß Hauptanspruch. Ferner wird die Aufgabe gelöst durch ein Festoxid-Brennstoffzellen System zur Durchführung des Verfahrens gemäß Nebenanspruch.

Vorteilhafte Ausgestaltungen des Verfahrens oder der Vorrichtung finden sich in den jeweils darauf rückbezogenen, abhängigen Ansprüchen.

Gegenstand der Erfindung

Im Rahmen der Erfindung wurde herausgefunden, dass es zur sicheren Betriebsführung nicht zwingend erforderlich ist, den genauen absoluten Massenstrom des kontinuierlich zurückgeführten Anodenabgases (Rezirkulatstrom) zu kennen, sondern alleine die Kenntnis des Aufteilungsverhältnisses von kontinuierlich rückgeführtem (rezirkuliertem) zu insgesamt erzeugtem Anodengas ausreichend ist.

Im Rahmen dieser Erfindung wird daher eine sichere Betriebsführung für eine SOFC vorgeschlagen, bei der lediglich das Rezirkulationsverhältnis (Aufteilungsverhältnis von zurückgeführtem zu insgesamt erzeugtem Anodenabgas) vorgegeben wird. Dazu wird eine robuste und einfache Messanordnung der Rezyklierung bereitgestellt, mit der ein zuverlässiger Betrieb der Anlage bei geringem Messaufwand ermöglicht wird.

Um das Rezirkulationsverhältnis zu bestimmen, ist es ausreichend, wenn beispielsweise die Volumenströme an zwei verschiedenen Stellen der drei möglichen Leitungsstränge des Anodenabgasstromes gemessen werden. Da in allen Leitungssträngen nahezu gleiche Temperaturen und Gaszusammensetzungen vorliegen, kann das Verhältnis der Volumenströme in diesem Fall dem Verhältnis der Massenströme gleichgesetzt werden. Auf eine Kalibration unterschiedlicher Messgeräte, bzw. eines Messgerätes auf Temperatur und Gaszusammensetzung kann so vorteilhaft verzichtet werden. Weitere Vorteile ergeben sich auch bei der Berücksichtigung der Drift der Messgenauigkeit über der Zeit, die bei einer solchen Differenzmessung ebenfalls deutlich geringere Auswirkungen hat.

Auf diese Art und Weise kann durch einfache Volumenstrommessungen an zwei unterschiedlichen Stellen in den Leitungssträngen des Anodenabgasstromes das benötigte Rezirkulationsverhältnis bestimmt werden.

Dieser positive Effekt wird insbesondere dann noch verstärkt, wenn als Messgeräte für den Volumenstrom zwei Geräte vom gleichen Typ eingesetzt werden, die damit nahezu ähnliche Messfehler aufweisen.

Die Messungen finden in der Regel bei Temperaturen zwischen 600 und 900 °C statt.

Das für diesen Temperaturbereich günstigste Messprinzip ist die Wirkdruckmessung, da die nach diesem Messprinzip arbeitenden Messgeräte weder bewegliche noch elektronische Teile im heißen Bereich beinhalten. Als geeignete Wirkdruckmessgeräte können alle herkömmlichen, für die Messung von Durchflüssen geeignete Geräte eingesetzt werden, insbesondere Messblenden, Prandtl Rohre, Pitot-Rohre mit zusätzlicher Messung des statischen Druckes, Laminar-Flow-Elemente, Venturi-Rohr oder nur der Abzweigdruckverlust in einem T-Stück ermittelt werden. Ein Pitotrohr misst den Gesamtdruck und kann zusammen mit einer statischen Drucksonde ausgestattet sein, um die Geschwindigkeit des Gases zu messen, so wie es in einem Prandtl'schen Staurohr verwirklicht ist.

In den vorgenannten Messgeräten wird der Effekt genutzt:

$$\sqrt{Staudruck} \sim Str\ddot{o}mungsgeschwindigkeit$$

Eine Ausnahme bilden die Laminar-Flow-Elemente. Hier gilt:

$$Staudruck \sim Str\ddot{o}mungsgeschwindigkeit$$

Werden die beiden erfindungsgemäßen Volumenstrommessgräte in den beiden Abgassträngen nahe beieinander positioniert, so kann man davon ausgehen, dass die Zusammensetzung, die Temperatur und der Druck des Abgases für beide Messungen gleich sind. Für die Erfindung ist es entscheidend, beide Messungen mit Messgeräten durchzuführen, die gleiche Kennlinien besitzen, auch wenn sich die Stoffwerte des Gasgemisches ändern. Hierfür bietet es sich vorteilhaft an, gleiche Messgeräte in Leitungen von gleicher Geometrie einzusetzen.

Aus dem Verhältnis der Staudrücke kann das Verhältnis der Strömungsgeschwindigkeiten und damit auch das der Volumen- bzw. Massenströme nach der folgenden Formel ermittelt werden:

$$\sqrt{\frac{Staudruck1}{Staudruck2}} = \frac{Volumenstrom1}{Volumenstrom2} \qquad bzw.$$

$$\frac{Staudruck1}{Staudruck2} = \frac{Volumenstrom1}{Volumenstrom2} \text{ bei den Laminar-Flow-Elementen.}$$

Diese Beziehung ist unabhängig von der Gaszusammensetzung, der Temperatur, dem Druck und dem von der Anlagenlast abhängigen Anodenaustrittsstrom gültig. Es ist somit nicht notwendig, die Kennlinie, sondern lediglich nur den Typ des Messgerätes (quadratische oder lineare Funktion) zu kennen.

Die Genauigkeit dieses Messprinzips hängt insofern nur von der Genauigkeit der Messgeräte und nicht von den vorgenannten äußeren Einflüssen ab. Gleiches gilt für die Drift der Messgenauigkeit über der Zeit.

Prinzipiell sind zur Ermittlung des Verhältnisses von zurückgeführtem zu insgesamt erzeugtem Anodenabgas wenigstens zwei Messungen an unterschiedlichen Stellen der Leitungsstränge des Anodenabgases notwendig. Prinzipiell ergeben sich fünf verschiedene Stellen, an denen prinzipiell Volumenstrom-, bzw. Massenstrommessungen durchgeführt werden können:

1 Zuführung von frischem Brennstoff zur Anode
2 Gesamtzuführung an Brennstoff zur Anode der Brennstoffzelle = frischer Brennstoff und rezyklierter Brennstoff
3 Abführung des insgesamt erzeugten Anodenabgases
4 aus dem System ausgeschleuster Teilstrom des Anodenabgases
5 rückgeführter Teilstrom des Anodenabgases (Rezirkulatstrom)

Unter der Annahme, dass sich das insgesamt erzeugte Anodenabgas (3) ausschließlich auf den aus dem System ausgeschleusten Teilstrom des Anodenabgases (4) und den kontinuierlich rückgeführten Teilstrom des Anodenabgases (Rezirkulatstrom) (5) aufteilt, ist es ausreichend, wenn erfindungsgemäß an wenigstens zwei der Stellen 3, 4 oder 5 entsprechende Volumenstrommessungen in den Anodenabgasleitungen für das Abgas durchgeführt werden, um so eine Aussage zum Rezirkulationsverhältnis (5 zu 3) machen zu können.

Da jede Messstelle in der Regel eine geringe, aber nicht zu vernachlässigende Druckminderung mit sich bringt, die zuvor vom System kompensiert werden muss, ist es vorteilhaft, wenn eine Messstelle innerhalb der Leitungen angeordnet ist, die den weiteren Betrieb am wenigsten beeinflusst.

Eine solche Stelle ist insbesondere die Leitung, durch die das Anodenabgas teilweise ausgeschleust wird. Der Druckverlust an dieser Stelle erhöht nicht den Druckverlust der Rezyklatschleife.

Eine vorteilhafte Ausführung sieht daher vor, die beiden Messstellen an den Stellen 3 und 4 vorzusehen.

Die Erfindung, die hier anhand des Anodenkreislaufes für eine Brennstoffzelle erläutert ist, ist jedoch nicht darauf beschränkt. In analoger Weise kann eine solche Messanordnung beispielsweise auch für einen Kathodenkreislauf in einer Brennstoffzelle vorgesehen werden, und durch ein entsprechendes Verfahren betrieben werden.

Ferner ist es auch denkbar, die Erfindung bei einer Brennstoffzelle bzw. einem Brennstoffzellenstapel mit einer nachgeschalteten Nachverbrennung vorzusehen, bei der die anoden- und kathodenseitigen Abgase zusammengeführt und anschließend verbrannt werden, bevor sie endgültig aus dem System ausgeschleust werden. Sofern auch für den Nachbrenner eine zumindest teilweise Rückführung des Abgases zur Brennstoffzelle, bzw. dem Stapel vorgesehen ist, würde sich auch hier das erfindungsgemäße Verfahren zur Teilrückführung realisieren lassen. Gegebenenfalls müsste bei einer solchen Ausgestaltung der Erfindung aber ein spezieller Reformer, beispielsweise ein autothermer Reformer, für die Brennstoffzelle eingesetzt werden.

Spezieller Beschreibungsteil

Im Folgenden wird die Erfindung anhand von Ausführungsbeispielen näher erläutert, ohne dass dadurch eine Einschränkung des Schutzbereiches zu verstehen ist.

Das Festoxid-Brennstoffzellensystem umfasst eine Mehrzahl von Brennstoffzellen, die vorzugsweise in Stapelbauweise angeordnet sind, und bei dem ein oder mehrere Brennstoffzellen in bekannter Weise elektrisch in Serie und/oder parallel geschaltet sein können, um ein gewünschtes Spannungs- und Stromniveau für elektrische Verbraucher bereitstellen zu können. Die Brennstoffzellen weisen jeweils eine Kathode, den Festelektrolyten sowie eine Anode auf.

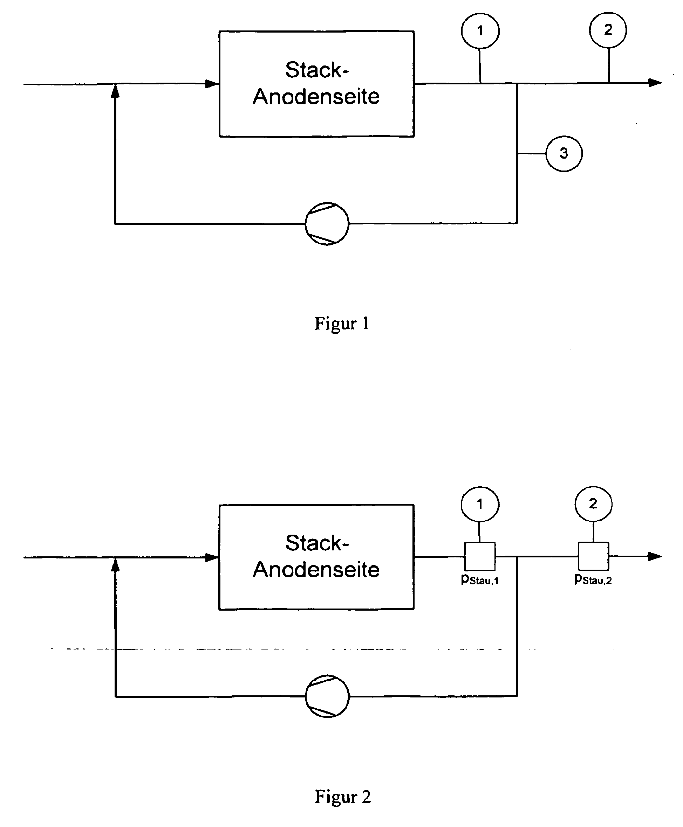

In den Figuren 1 bis 4 wird stellvertretend für alle Anoden des erfindungsgemäßen Brennstoffzellenstapels lediglich vereinfacht eine Stackanodenseite dargestellt.

Der Anode wird über eine anodenseitige Zuführleitung ein Brennstoff, typischerweise Wasserstoff, zugeführt. Sofern kein reiner Wasserstoff zur Verfügung steht, sondern die Brennstoffzelle beispielsweise mit Erdgas betrieben wird, ist ein entsprechender Vorreformer vorgesehen, der der Anodenstackseite den notwendigen Wasserstoff zur Verfügung stellen kann.

Reduktionsmittel und Oxidationsmittel reagieren in den Brennstoffzellen des Brennstoffzellenstapeis miteinander. Die Reaktionsprodukte auf der Anodenseite werden über die Anodenabführleitung abgeführt, wobei für einen Teilstrom des Anodenabgases eine kontinuierliche Rückführung (Kreislaufführung) vorgesehen ist, während der Rest des Anodenabgases als Systemabgas ausgeschleust wird. Im Rezirkulatstrom ist zudem ein Verdichter angeordnet, der den dort auftretenden Druckverlust kompensiert.

In der Figur 1 sind die für die erfindungsgemäßen Messungen der Volumenströme des Anodenabgases prinzipiell geeigneten Messstellen 3, 4 und 5 eingezeichnet.

Für das vorgeschlagene Messprinzip gibt es drei Anordnungsmöglichkeiten, wie in den Figuren 2 bis 4 dargestellt ist. Das Aufteilungsverhältnis RR (Rezirkulierungs-Rate) ist definiert als:

$$RR = \frac{\dot{V}_{Rezirkulat}}{\dot{V}_{Anodenabga}} = \frac{w_{Rezirkulat}}{w_{Anodenabga}} = \frac{\dot{m}_{Rezirkulat}}{\dot{m}_{Anodenabga}}$$

mit: V = Volumenstrom, w = Strömungsgeschwindigkeit und $\dot{m}$ = Massestrom.

Je nach Anordnung der Messgeräte gilt z. B. bei der Anordnung gemäß Figur 2:

$$RR = \frac{\sqrt{Staudruck\ 1} - \sqrt{Staudruck\ 2}}{\sqrt{Staudruck\ 1}}$$

bzw. für Laminar-Flow-Elemente

$$RR = \frac{Staudruck\ 1 - Staudruck\ 2}{Staudruck\ 1}$$

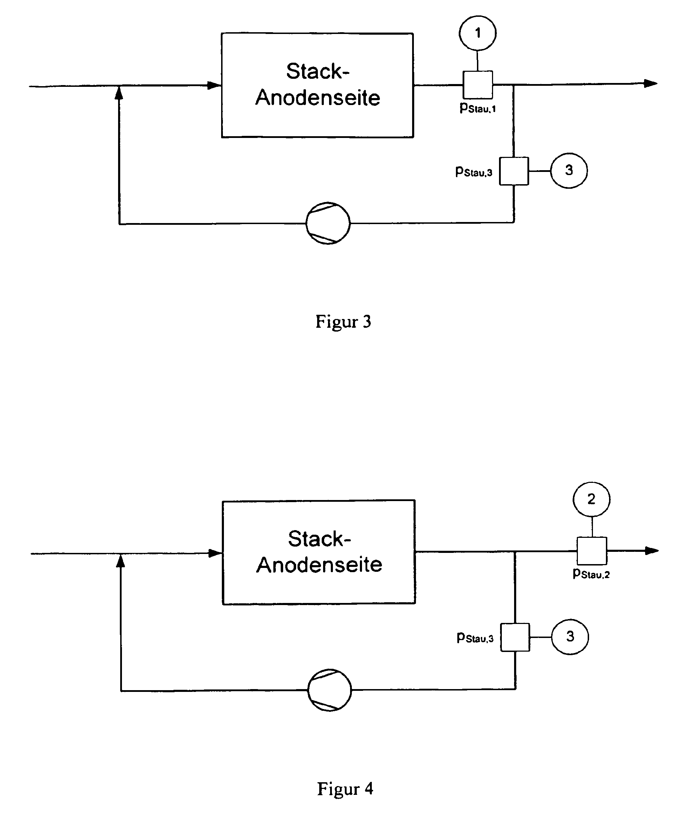

oder bei der Anordnung gemäß Figur 3:

$$RR = \frac{\sqrt{Staudruck\ 3}}{\sqrt{Staudruck\ 1}}$$

bzw. für Laminar-Flow-Elemente

$$RR = \frac{Staudruck\ 3}{Staudruck\ 1}$$

oder bei der Anordnung gemäß Figur 4:

$$RR = \frac{\sqrt{Staudruck\ 3}}{\sqrt{Staudruck\ 2} + \sqrt{Staudruck\ 3}}$$

bzw. für Laminar-Flow-Elemente

$$RR = \frac{Staudruck\ 3}{Staudruck\ 2 + Staudruck\ 3}$$

Unter Berücksichtigung des Druckverlustes ist somit die Anordnung nach Figur 4 besonders vorteilhaft.

Die Arbeiten, die zu dieser Erfindung geführt haben, wurden gefördert durch das 7. Rahmenprogramm der Europäischen Gemeinschaft (FP7/2007-2013) zum Thema "Fuel Cells and Hydrogen Joint Technology Initiative" unter der bewilligten Projekt-Nr. 244821.

**Patentansprüche**

1.  Verfahren zum Betreiben wenigstens einer Festoxid-Brennstoffzelle, bei der der Anodenseite frischer Brennstoff zugeführt wird, und bei der auf der Anodenseite Anodenabgas abgeführt wird, wobei ein erster Teilstrom des Anodenabgases als kontinuierliche Kreislaufführung der Anodenseite der Brennstoffzelle wieder zugeführt wird, und der restliche Teilstrom als Systemabgas kontinuierlich ausgeschleust wird, **dadurch gekennzeichnet, dass** das tatsächliche Rezirkulationsverhältnis, welches sich aus dem Quotienten aus dem Volumenstrom des rezirkulierten Anodenabgases und dem Volumenstrom des insgesamt erzeugten Anodenabgas ergibt, dadurch ermittelt wird, dass im Anodenabgasstrom an wenigstens zwei Stellen Staudrücke gemessenen werden, und aus den zwei gemessenen Staudrücken das tatsächliche Rezirkulationsverhältnis berechnet wird, wobei dazu entweder

    - die Staudrücke des ausgeschleusten Anodenabgases und des gesamten Anodenabgases gemessen werden, oder
    - die Staudrücke des ausgeschleusten Anodenabgases und des rezirkulierten Anodenabgases gemessen werden oder
    - die Staudrücke des rezirkulierten Anodenabgases und des gesamten Anodenabgases gemessen werden.

2.  Verfahren nach Anspruch 1, bei dem die Messungen der beiden Staudrücke jeweils als Differenzmessungen durchgeführt werden.

3.  Verfahren nach einem der Ansprüche 1 bis 2, bei dem für die Messung der Staudrücke identische Messgeräte verwendet werden.

4.  Verfahren nach einem der Ansprüche 1 bis 3, bei dem zusätzlich auch ein Kathodeabgaskreislauf vorhanden ist, bei dem ein erster Teilstrom des Kathodenabgases als Kreislaufführung der Kathodenseite der Brennstoffzelle wieder zugeführt wird, und der restliche Teilstrom des Kathodenabgases als Systemabgas kontinuierlich ausgeschleust wird, und wobei im Kathodenabgasstrom an wenigstens zwei Stellen die Staudrücke gemessen werden und das Rezirkulationsverhältnis, als Quotient aus dem Volumenstrom des rezirkulierten Kathodenabgases und dem Volumenstrom des insgesamt erzeugten Kathodenabgases aus den gemessenen Staudrücken berechnet wird.

5. Verfahren nach einem der Ansprüche 1 bis 4, bei dem die anoden- und kathodenseitig erzeugten Abgase in einem Nachbrenner verbrannt werden, wobei ein erster Teilstrom des Nachbrennerabgases als Kreislaufführung der Anodenseite der Brennstoffzelle wieder zugeführt wird, und der restliche Teilstrom des Nachbrennerabgases als Systemabgas kontinuierlich ausgeschleust wird, und wobei im Nachbrennerabgasstrom an wenigstens zwei Stellen die Staudrücke gemessen werden und das Rezirkulationsverhältnis, als Quotient aus dem Volumenstrom des rezirkulierten Nachbrennerabgases und dem Volumenstrom des insgesamt erzeugten Nachbrennerabgases aus den gemessenen Staudrücken berechnet wird.

6. Festoxid-Brennstoffzelle, mit einer Anode, einem Festelektrolyten sowie einer Kathode, mit einer Anodenabgasleitung, einem Anodenabgaskreislauf und einem darin angeordneten Strömungsmittel, in dem ein erster Teilstrom des Anodenabgases als Kreislaufführung der Anodenseite der Brennstoffzelle wieder zugeführt wird, sowie einer Systemabgasleitung, über die der restliche Teilstrom des Anodenabgases als Systemabgas kontinuierlich abgeführt wird, **dadurch gekennzeichnet,**
**dass** an wenigstens zwei Stellen ein Messgerät zur Messung eines Staudrucks in der Leitung vorgesehen ist, wobei entweder

- jeweils ein Messgerät in der Anodenabgasleitung und in dem Anodenabgaskreislauf der Anodenseite oder
- jeweils ein Messgerät in der Anodenabgasleitung und in der Systemabgasleitung oder
- jeweils ein Messgerät in der Systemabgasleitung und in dem Anodenabgaskreislauf der Anodenseite angeordnet ist.

7. Festoxid-Brennstoffzelle nach Anspruch 6, bei dem zwei identische Messgeräte zur Messung eines Staudrucks vorgesehen sind.

8. Festoxid-Brennstoffzelle nach einem der Ansprüche 6 bis 7 mit einer Kathodenabgasleitung, einem Kathodenabgaskreislauf, in dem ein erster Teilstrom des Kathodenabgases als Kreislaufführung der Kathodenseite der Brennstoffzelle wieder zugeführt wird, sowie einer weiteren Systemabgasleitung für das Kathodenabgas, über die der restliche Teilstrom des Kathodenabgases kontinuierlich abgeführt wird, **dadurch gekennzeichnet,**
**dass** an wenigstens zwei Stellen im Kathodenabgasstrom ein Messgerät zur Messung des Staudrucks in der Leitung vorgesehen ist.

9. Festoxid-Brennstoffzelle nach einem der Ansprüche 6 bis 8 mit einem Nachbrenner, in dem Anoden- und Kathodenabgase verbrannt werden, mit einem Nachbrennerabgaskreislauf, bei dem ein erster Teilstrom des Nachbrennerabgases als Kreislaufführung der Anodenseite der Brennstoffzelle wieder zugeführt wird, sowie einer weiteren Systemabgasleitung für das Nachbrennerabgas, über die der restliche Teilstrom des Nachbrennerabgases kontinuierlich abgeführt wird, **dadurch gekennzeichnet,**
**dass** an wenigstens zwei Stellen im Nachbrennerabgasstrom ein Messgerät zur Messung des Staudrucks in der Leitung vorgesehen ist.

**Claims**

1. Method for operating at least one solid oxide fuel cell, in which fresh fuel is supplied to the anode side and in which the anode exhaust gas is removed on the anode side, in which a first partial flow of the anode exhaust gas is supplied to the anode side of the fuel cell again in a continuous recirculating system and the rest of the partial flow is removed continuously as system exhaust gas, **characterised in that**
the actual recirculation ratio, which results from the quotient from the volume flow of the recirculated anode exhaust gas and the volume flow of the anode exhaust gas produced as a whole, is obtained by dynamic pressures in the anode exhaust gas flow being measured at two points at least and the actual recirculation ratio being calculated from the two dynamic pressures measured, in which either

- the dynamic pressures of the anode exhaust gas removed and the whole of the anode exhaust gas are measured or
- the dynamic pressures of the anode exhaust gas removed and the anode exhaust gas recirculated are measured or
- the dynamic pressures of the recirculated anode exhaust gas and the whole of the anode exhaust gas are measured.

2. Method according to claim 1, in which the measurements of both dynamic pressures are carried out as differential measurements.

3. Method according to one of claims 1 to 2, in which identical measuring devices are used for measuring the dynamic pressures.

4. Method according to one of claims 1 to 3, in which in addition there is also cathode exhaust gas recirculation, in which a first partial flow of the cathode exhaust gas is supplied to the cathode side of the fuel cell again as a recirculating system and the rest of the partial flow of the cathode exhaust gas is removed continuously as system exhaust gas, and in which the dynamic pressures are measured in the cathode exhaust gas flow at two points at least and the recirculation ratio is calculated from the dynamic pressures measured as the quotient from the volume flow of the recirculated cathode exhaust gas and the volume flow of the cathode exhaust gas produced as a whole.

5. Method according to one of claims 1 to 4, in which the exhaust gas produced on the anode and cathode side is burned in an afterburner, in which a first partial flow of the afterburner exhaust gas is supplied to the anode side of the fuel cell again as a recirculating system and the rest of the partial flow of the afterburner is removed continuously as system exhaust gas and in which the dynamic pressures are measured in the afterburner exhaust gas flow at two points at least and the recirculation ratio is calculated as the quotient from the volume flow of the recirculated afterburner exhaust gas and the volume flow of the afterburner exhaust gas produced as a whole.

6. Solid oxide fuel cell with an anode, a solid electrolyte and a cathode, with an anode exhaust gas circuit, anode exhaust gas recirculation and a flowing means arranged in it, in which a first partial flow of the anode exhaust gas is supplied to the anode side of the fuel cell again as a recirculating system, and a system exhaust gas circuit, through which the rest of the partial flow of the anode exhaust gas is removed continuously as system exhaust gas, **characterised in that**,
a measuring device for measuring dynamic pressure in the circuit is provided at two points at least, in which either

- a measuring device is arranged in the anode exhaust gas circuit and in the anode exhaust gas recirculation on the anode side or
- a measuring device is provided in the anode exhaust gas circuit and in the system exhaust gas circuit or
- a measuring device is arranged in the system exhaust gas circuit and in the anode exhaust gas recirculation on the anode side.

7. Solid oxide fuel cell according to claim 6, in which two identical measuring devices are provided for measuring dynamic pressure.

8. Solid oxide fuel cell according to one of claims 6 to 7 with a cathode exhaust gas circuit, cathode exhaust gas recirculation, in which a first partial flow of the cathode exhaust gas is supplied to the cathode side of the fuel cell again as a recirculating system, and a further system exhaust gas circuit for the cathode exhaust gas, through which the rest of the part flow of the cathode exhaust gas is removed continuously, **characterised in that**,
a measuring device for measuring the dynamic pressure in the circuit is provided at two points at least in the cathode exhaust gas flow.

9. Solid oxide fuel cell according to one of claims 6 to 8 with an afterburner, in which anode and cathode exhaust gas is burnt, with afterburner exhaust gas recirculation, in which a first partial flow of the afterburner exhaust gas is supplied to the anode side of the fuel cell again as a recirculating system, and a further system exhaust gas circuit for the afterburner exhaust gas, through which the rest of the partial flow of the afterburner exhaust gas is removed continuously, **characterised in that**,
a measuring device for measuring dynamic pressure in the circuit is provided at two points at least in the afterburner exhaust gas flow.

**Revendications**

1. Procédé servant à faire fonctionner une pile à combustible à oxyde solide, pour laquelle un combustible frais est amené au côté anodique et un effluent gazeux anodique est évacué sur le côté anodique, sachant qu'un premier flux partiel de l'effluent gazeux anodique est ramené en tant que circuit de recyclage continu au côté anodique de la pile à combustible et que le flux partiel restant est éclusé au dehors en continu en tant qu'effluent gazeux de système, **caractérisé en ce que**
le rapport réel de recirculation, lequel découle du quotient entre le débit volumique de l'effluent gazeux anodique remis en circulation et le débit volumique de l'effluent gazeux anodique produit globalement, est déterminé **en ce que** dans le flux de l'effluent gazeux anodique, des pressions dynamiques sont mesurées en au moins deux endroits et **en ce qu'**on calcule le rapport réel de recirculation à partir des deux pressions dynamiques mesurées, sachant qu'à cela s'ajoute le fait que soit

   - les pressions dynamiques de l'effluent gazeux anodique éclusé au dehors et de l'effluent gazeux global sont mesurées, soit
   - les pressions dynamiques de l'effluent gazeux anodique éclusé au dehors et de l'effluent gazeux anodique remis en circulation sont mesurées, soit
   - les pressions dynamiques de l'effluent gazeux anodique remis en circulation et de l'effluent gazeux anodique global sont mesurées.

2. Procédé selon la revendication 1, dans le cadre duquel les mesures des deux pressions dynamiques sont effectuées respectivement comme des mesures de différence.

3. Procédé selon l'une quelconque des revendications 1 à 2, dans le cadre duquel on utilise pour la mesure des pressions dynamiques des appareils de mesure identiques.

4. Procédé selon l'une quelconque des revendications 1 à 3, dans le cadre duquel en complément est également présent un circuit pour effluent gazeux cathodique, dans le cadre duquel un premier flux partiel de l'effluent gazeux cathodique est ramené en tant que circuit de recyclage au côté cathodique de la pile à combustible et le flux partiel restant de l'effluent gazeux cathodique est éclusé au dehors en continu en tant qu'effluent gazeux de système, et sachant que les pressions dynamiques sont mesurées dans le flux de l'effluent gazeux cathodique en au moins deux endroits et que le rapport de recirculation, en tant que quotient entre le débit volumique de l'effluent gazeux cathodique remis en circulation et le débit volumique de l'effluent gazeux cathodique produit globalement est calculé à partir des pressions dynamiques mesurées.

5. Procédé selon l'une quelconque des revendications 1 à 4, dans le cadre duquel les effluents gazeux produits côté anodique et côté cathodique sont brûlés dans un post-brûleur, sachant qu'un premier flux partiel de l'effluent gazeux du post-brûleur est ramené en tant que circuit de recyclage au côté anodique de la pile à combustible et que le flux partiel restant de l'effluent gazeux du post-brûleur est éclusé au dehors en continu en tant qu'effluent gazeux de système, et sachant que les pressions dynamiques sont mesurées dans le flux de l'effluent gazeux du post-brûleur en au moins deux endroits et que le rapport de recirculation, en tant que quotient entre le débit volumique de l'effluent gazeux du post-brûleur remis en circulation et le débit volumique de l'effluent gazeux du post-brûleur produit globalement est calculé à partir des pressions dynamiques mesurées.

6. Pile à combustible à oxyde solide, comprenant une anode, un électrolyte solide ainsi qu'une cathode, comprenant une conduite pour effluent gazeux anodique, un circuit pour effluent gazeux anodique et un moyen d'écoulement disposé dans ce dernier, dans lequel un premier flux partiel de l'effluent gazeux anodique est ramené en tant que circuit de recyclage au côté anodique de la pile à combustible, comprenant également une conduite pour effluent gazeux de système, par laquelle est évacué en continu le flux partiel restant de l'effluent gazeux anodique en tant qu'effluent gazeux de système, **caractérisée**
**en ce qu'**un appareil de mesure servant à mesurer une pression dynamique dans la conduite est prévu en au moins deux endroits, sachant que soit

   - respectivement un appareil de mesure est disposé dans la conduite pour effluent gazeux anodique et dans le circuit pour effluent gazeux anodique du côté anodique, soit
   - respectivement un appareil de mesure est disposé dans la conduite pour effluent gazeux anodique et dans la conduite pour effluent gazeux de système, soit
   - respectivement un appareil de mesure est disposé dans la conduite pour effluent gazeux anodique et dans le circuit pour effluent gazeux anodique du côté anodique.

7. Pile à combustible à oxyde solide selon la revendication 6, dans le cadre de laquelle deux appareils de mesure identiques sont prévus aux fins de la mesure d'une pression dynamique.

8. Pile à combustible à oxyde solide selon l'une quelconque des revendications 6 à 7, comprenant une conduite pour effluent gazeux cathodique, un circuit pour effluent gazeux cathodique, dans lequel un premier flux partiel de l'effluent gazeux cathodique est amené en tant que circuit de recyclage au côté cathodique de la pile à combustible, comprenant également une conduite supplémentaire pour effluent gazeux de système pour l'effluent gazeux cathodique, par laquelle le flux partiel restant de l'effluent gazeux cathodique est évacué en continu, **caractérisée en ce qu'**un appareil de mesure servant à mesurer la pression dynamique dans la conduite est prévu en au moins deux endroits dans le flux d'effluent gazeux cathodique.

9. Pile à combustible à oxyde solide selon l'une quelconque des revendications 6 à 8, comprenant un post-brûleur, dans lequel les effluents gazeux anodiques et cathodiques sont brûlés, comprenant un circuit pour effluent gazeux du post-brûleur, dans le cadre duquel un premier flux partiel de l'effluent gazeux du post-brûleur est ramené en tant que circuit de recyclage au côté anodique de la pile à combustible, comprenant également une conduite supplémentaire pour effluent gazeux de système pour l'effluent gazeux du post-brûleur, par laquelle le flux partiel restant de l'effluent gazeux du post-brûleur est évacué en continu, **caractérisée en ce qu'**un appareil de mesure servant à mesurer la pression dynamique dans la conduite est prévu en au moins deux endroits dans le flux de l'effluent gazeux du post-brûleur.

Figur 1

Figur 2

Stack-
Anodenseite

$p_{Stau,1}$

$p_{Stau,3}$

1

3

Figur 3

Stack-
Anodenseite

$p_{Stau,2}$

$p_{Stau,3}$

2

3

Figur 4

**EP 2 426 766 B1**

**IN DER BESCHREIBUNG AUFGEFÜHRTE DOKUMENTE**

**In der Beschreibung aufgeführte Patentdokumente**

- JP 3037965 A

- DE 102008054375 A1